# EUROPEAN PATENT APPLICATION

(11) **EP 0 844 215 A2**
(43) Date of publication of application: **27.05.1998**
(21) Application number: 97309413.9
(22) Date of filing: 21.11.1997
(51) Int. Cl.: C02F 1/72

(54) **Water-bath sanitising**

(30) Priority: 21.11.1996 GB 9624241
(71) Applicant: Acca, Derek, Westerham, Kent TN16 2NP (GB); Acca, Ramola, Westerham, Kent TN16 2NP (GB)
(72) Inventor: Acca, Derek, Westerham, Kent TN16 2NP (GB); Acca, Ramola, Westerham, Kent TN16 2NP (GB)
(74) Representative: Pearce, Anthony Richmond

(57) **Abstract**

To facilitate safe dosing of water-baths such as swimming pools, spas, hot water tubs, jetted and hydrotherapy baths and animal exercise pools, with a sanitising agent, the invention provides a water-bath sanitising package in which a water-soluble peroxy compound (such as a peroxysulphate (SO₅²⁻), a peroxycarbonate (CO₄²⁻), a peroxyborate (BO₄²⁻), an alkali metal or ammonium hydrogen peroxy salt, a di(alkali metal) or diammonium peroxy salt and a triple salt of potassium hydrogen peroxysulphate, potassium hydrogen sulphate and potassium sulphate) is encapsulated in a water-soluble or water-disintegrable film of hydroxymethylpropylcellulose.

## Description

This invention relates to water-bath sanitising and is more particularly concerned with materials for sanitising water-baths, such as swimming pools, spas, hot water tubs, jetted and hydrotherapy baths and animal exercise pools.

It is an object of the present invention to provide a convenient and safe way of dosing sanitising material into water-baths.

According to a first aspect of the present invention, there is provided a water-bath sanitising package comprising a water-soluble peroxy compound encapsulated in a water-soluble or water-disintegrable film of hydroxymethylpropylcellulose (HMPC). Hydroxymethylpropylcellulose (HMPC) is also referred to as hydroxypropyl methyl cellulose (HPMC).

The peroxy compound exerts its sanitising effect by virtue of being a powerful oxidising agent. HMPC is found to be surprisingly suitable for packaging such a powerful oxidising agent, particularly when such agent is present in virtually undiluted form. Preferably, the water-soluble peroxy compound is a solid at room temperature. It is preferably a chlorine-free compound and is more preferably also free of other halogens so as to reduce the risk of production of compounds such as CFCs which attack the ozone layer and compounds which can deleteriously affect subsequent waste water treatments when the water is finally discharged to waste. Preferably, the water-soluble compound is a water-soluble salt, for example an alkali metal salt such as a sodium or potassium salt, or an ammonium salt.

The peroxy compound may be a salt selected from a peroxysulphate (SO₅²⁻), a peroxycarbonate (CO₄²⁻) or a peroxyborate (BO₄²⁻). The peroxy salt may be an alkali metal or ammonium hydrogen peroxy salt or a di(alkali metal) or diammonium peroxy salt. It is also within the scope of the present invention for the water-soluble peroxy salt to be a triple salt of, for example, potassium hydrogen peroxysulphate, potassium hydrogen sulphate and potassium sulphate.

Instead of being a peroxy salt, the peroxy compound may be a compound such as urea peroxide (percarbamide).

Although reference is made herein to "a water-soluble peroxy compound", it is to be appreciated that more than one such compound may be employed in a water-bath sanitising package according to the present invention.

The peroxy compound which is encapsulated within the film may be in the form of powder or loose granules or it may be in the form of a tablet. The peroxy compound preferably comprises at least 90 wt% of the contents of the package, more preferably at least 95 wt% and most preferably at least 97 wt%. In the case of tablets, a minor amount of a binder and a release agent (e.g, sodium benzoate) will normally make up the remainder. In the case of packages containing the peroxy compound in granule form, such compound may constitute 100 wt% of the contents of the package. Thus, the peroxy compound(s) used in the package according to the present invention is/are primarily intended to constitute the sole sanitising ingredient of the package. This is in direct contrast to known packages which are for use in the bowls or cisterns of water closets and which contain a block consisting mainly of a slow release dye material with minor amounts of perfume and chlorine-based disinfectant. However, it is within the scope of the present invention for a minor amount of other material(s), such as clarifying agents, sequestering agents and chelating agents, and/or other bactericides and algicides, to be included in the package.

In the case where the weight of the tablet or the granules to be encapsulated is relatively small (e.g. up to about 150 - 200 g), the HMPC film typically has a thickness of about 35 to 200 µm, more preferably about 35 to 150 µm. In the case where the weight of the tablet or the granules to be encapsulated is relatively large (e.g. about 1 to 2 kg), the film typically has a thickness of about 100 to 200 µm. These larger sizes can be used in dosing tanks where dissolving with agitation is possible. Preferably, the packaged tablet size may range from 5 g to 500 g, whilst the packaged granules size may range from 100 g to 2500 g.

The film preferably forms an hermetic seal about the peroxy compound, so that there are no harmful gaseous emanations from within, thereby facitating safe storage, transport and handling.

It is primarily intended that the water-bath sanitising package is used to provide the main sanitising treatment for the volume of water in the bath being treated and not simply as a so-called "shock" treatment which is commonly applied to pools such as swimming pools when infection of the pool has already been recognised.

According to a second aspect of the present invention, there is provided a method of maintaining water in a water-bath in a sanitised condition, comprising introducing water-sanitising packages according to said first aspect of the present invention into the water-bath periodically in accordance with a predetermined treatment regime.

The encapsulation of the peroxy compound enables the package to be handled even by inexperienced persons in relative safety without incurring the hazard of the free, undiluted peroxy compound coming into contact with the handler. Additionally, the package obviates the need for the peroxy compound to be weighed out before use and can be provided, if desired, in a variety of sizes which the user can select according to the intended application. Also, the packaging of the peroxy compound helps to ensure that the risk of spillage is minimised during storage, transportation and handling.

In addition, the encapsulating film may be pre-printed with, for example, dosing instructions and/or regulatory hazard warnings.

In order to aid recognition of packages, they may be colour coded by, for example, incorporating dye within and/or on the package. The film itself may be clear or colour coded. The film may be formulated with a perfume, fragrance or the like to facilitate identification by a visually impaired (e.g. colour blind) person.

The use of a water-soluble peroxy compound is advantageous over the use of chlorine-based sanitising agents in that the oxidising effect of the peroxy salt is lost relatively rapidly after treatment, with the result that the spent salt does not exert an adverse effect when it finally reaches the local water-treatment works.

### Example

In a typical example, a water-bath sanitising package comprises 100 g of the triple salt, potassium hydrogen peroxysulphate, potassium hydrogen sulphate and potassium sulphate in approximate relative proportions of 2 moles of potassium hydrogen peroxysulphate (KHSO₅), 1 mole of potassium hydrogen sulphate (KHSO₄), and 1 mole of potassium sulphate (K₂SO₄). Such a peroxy salt is also referred to as pentapotassium bis(peroxymonosulphate) bis(sulphate) and has an oxidising potential of 1.47 mV. The salt is in free granule form and is encapsulated in a sachet which, in this example, is formed of a film having a thickness of 150 µm of a water-soluble hydroxymethylpropylcellulose (HMPC) available from Enak Limited of Horsham, Surrey, UK.

For use as the main sanitising agent in a domestic swimming pool, every two/three days, depending upon the intensity of use of the pool, the user merely introduces one of the above-described sachets or the same material in packaged tablet form into a surface skimming basket at the side of the swimming pool with the swimming pool pump running. The packaging quickly dissolves away so as to free the tablet or powder for dissolution in the water which has been skimmed from the surface of the swimming pool and which is passed through the filter and the pump before being returned to the pool. Alternatively, the packaged tablet may simply be introduced into a floating dispenser. For light commercial use, one such sachet or tablet would typically be used daily.

For commercial applications, the operator may apply granular material sachets via a dosing tank in which the sachets are dissolved, and a dosing pump. Typically, for a water volume of 45 m³, 4 to 5 Kg of granules are used for a 200 litre dosing tank.

For domestic jetted bath applications, a 5-10 g packaged tablet is considered sufficient to disinfect 0.25 m³, whilst two such tablets would typically be used for a similar-sized bath for commercial use. The peroxy salt sanitises the water and becomes converted to the relatively harmless sulphate.

It is considered that the sachets can be conveniently provided in sizes containing 50, 100 or 150 g of the peroxy salt and that the sachets can have the treatment regime printed thereon to facilitate correct dosing. The sachets can be conveniently sold in a 2.5 or 5 kg bag.

In an alternative embodiment, the required amount of peroxy salt in powder form is mixed with a minor amount (eg about 3 wt%) of a binder and formulated into a tablet in accordance with a per se known tabletting technique. Such tablet is then wrapped with a film of HMPC and heat-sealed to encapsulate the tablet. Such a tablet will dissolve rapidly in the water upon dissolving or disintegration of the HMPC film, although not quite so rapidly as the free granule form of the salt.

## Claims

1. A water-bath sanitising package characterised by comprising a water-soluble peroxy compound encapsulated in a water-soluble or water-disintegrable film of hydroxymethylpropylcellulose.

2. A water-bath sanitising package as claimed in claim 1, wherein the peroxy compound is chlorine-free.

3. A package as claimed in claim 1, wherein the peroxy compound is halogen-free.

4. A package as claimed in claim 1, 2 or 3, wherein the peroxy compound is a peroxy salt selected from a peroxysulphate (SO₅²⁻), a peroxycarbonate (CO₄²⁻), a peroxyborate (BO₄²⁻), an alkali metal or ammonium hydrogen peroxy salt, a di(alkali metal) or diammonium peroxy salt and a triple salt of potassium hydrogen peroxysulphate, potassium hydrogen sulphate and potassium sulphate.

5. A package as claimed in any one of claims 1 to 3, wherein the peroxy compound is urea peroxide (percarbamide).

6. A package as claimed in any preceding claim, wherein the peroxy compound comprises at least 90 wt% of the contents of the package.

7. A package as claimed in claim 6, wherein the peroxy compound comprises at least 95 wt% of the contents of the package.

8. A package as claimed in claim 7, wherein the peroxy compound comprises at least at least 97 wt% of the contents of the package.

9. A package as claime in any preceding claim, wherein the peroxy compound constitutes the sole sanitising ingredient of the package.

10. A method of maintaining a water-bath in a sanitised condition, comprising introducing water-sanitising packages as claimed in any preceding claim into the water-bath periodically in accordance with a predetermined treatment regime.
